# FASCICULE DE BREVET EUROPEEN

(11) **EP 0 956 807 B1**
(45) Date de publication et mention de la délivrance du brevet: **03.06.2009**
(21) Numéro de dépôt: 99630039.8
(22) Date de dépôt: 23.04.1999
(51) Int. Cl.: A47L 13/58, A47J 47/18

(54) **Dispositif de déchargement du liquide contenu dans un seau de nettoyage**
Entleerungseinrichtung für in einem Wischeimer enthaltene Flüssigkeit
Discharging means for liquid contained in a cleaning bucket

(30) Priorité: 30.04.1998 LU 90235
(43) Date de publication de la demande: 17.11.1999
(73) Titulaire: FILMOP S.r.l., 35010 Villa del Conte, (PD) (IT)
(72) Inventeur:
(74) Mandataire: Waxweiler, Jean

(56) Documents cités:
- DE-U- 29 606 883
- US-A- 3 390 818
- US-A- 4 713 859
- US-A- 4 798 307
- US-A- 4 815 160

## Description

La présente invention concerne un dispositif de déchargement du liquide contenu dans un seau de nettoyage.

Les seaux de nettoyage sont utilisés pour contenir des liquides détergents ou des liquides employés pour le rinçage des instruments utilisés pour le nettoyage des sols ou des parois tels que les serpillières et les balais de coton. La capacité de ces seaux est généralement telle qu'elle permette aux opérateurs de les transporter et de les manoeuvrer quant ils doivent être vidés. Cependant, on utilise jusqu'à présent des seaux ayant une capacité plutôt élevée et leur manoeuvrabilité devient difficile même pour un opérateur robuste physiquement. On prévoit, dans ces cas, d'équiper les seaux de roulettes pour faciliter leurs déplacements et de dispositifs de déchargement des liquides contenus dans les seaux, afin de faciliter leur manoeuvrabilité lorsqu'ils doivent être vidés. Pour pouvoir décharger la totalité du liquide contenu dans les seaux, les dispositifs de déchargement doivent être situés à un niveau qui ne soit pas supérieur à celui de leur fond.

Actuellement les dispositifs de déchargement utilisés dans les seaux de nettoyage sont constitués d'orifices ou d'ouvertures pourvus d'organes d'obturation actionnables par l'opérateur. Dans les seaux de nettoyage actuels on utilise, pour le déchargement du liquide contenu dans ces seaux, des dispositifs assimilables à des clapets de fond commandés à partir du haut du seau au moyen d'une tige agissant à l'encontre d'un ressort qui maintient le clapet fermé ou bien on utilise des robinets courants à clapet ou à sphère montés dans les parois, à l'extérieur du seau. Les divers systèmes de déchargement qui sont utilisés jusqu'à présent présentent cependant des inconvénients importants. Après une période assez brève d'utilisation et par suite d'une usure rapide, les surfaces de fermeture étanches présentent un égouttement progressif ce qui exige leur remplacement. En fait les liquides contenus dans les seaux de nettoyage qui doivent être déchargés, sont ceux qui ont été utilisés pour le rinçage des instruments de nettoyage et qui entraînent un encrassement des robinets, comme les balais de coton ou à éponge etc....

Les liquides de rinçage qui sont initialement propres, deviennent sales à la suite des rinçages et ils accumulent des particules abrasives et des saletés diverses. Par suite de l'usure des instruments immergés dans le liquide en vue de leur rinçage, et éventuellement de leur essorage, ceux-ci abandonnent peu à peu des filaments qui se détachent progressivement en produisant des fibres textiles qui se dispersent dans le liquide.

Toutes les matières résultant du rinçage et qui sont contenues dans le liquide pendant la phase de déchargement doivent passer à travers les dispositifs de déchargement dont le seau est pourvu. Comme on le comprendra aisément, les diverses pièces des dispositifs de déchargement sont soumises à une usure de la part des corpuscules abrasifs solides qui passent à travers elles. En outre, comme le flux du liquide est très ralenti à la fin du déchargement, des grains de matière solide peuvent se déposer sur les surfaces intermédiaires des dispositifs de déchargement et il peut se produire une accumulation progressive des fibres textiles présentes dans le liquide et provenant des instruments rincés. Les inconvénients qui résultent des circonstances décrites ci-dessus, provoquent avant tout l'usure progressive des surfaces en contact avec le liquide sale, la défaillance de la fermeture des dispositifs de déchargement présentant un égouttement déterminé et un épanchement du liquide et ils provoquent en outre une entrave progressive des pièces qui glissent les unes sur les autres par suite du dépôt de saletés sur les surfaces en regard. Les dispositifs de déchargement doivent être nettoyés périodiquement, ce qui entraîne une perte de temps, et ils doivent être également remplacés périodiquement. A la série de problèmes précités s'ajoute le coût non négligeable soit initial soit d'une manutention, des divers dispositifs de déchargement qui sont actuellement adoptés.

Un dispositif de déchargement connu de ce type est décrit dans le document DE-U1-29 606 883. Ce document DE-U1-29 606 883 décrit un dispositif de déchargement du liquide contenu dans un seau de nettoyage selon le préambule de la revendication 1, comprenant une partie fixe pourvue, en son centre, d'un orifice communiquant avec l'intérieur du seau.

Le but de la présente invention est de réaliser, d'une manière simple et particulièrement pratique, un dispositif de déchargement qui supprime tous les inconvénients associés aux dispositifs de déchargement actuellement utilisés sur les différents seaux de nettoyage qui existent sur le marché.

Ce but ainsi que d'autres sont atteints, suivant l'invention, par un nouveau dispositif de déchargement du liquide contenu dans un seau de nettoyage ayant les caractéristiques de la partie caractérisante de la revendication 1.

Tous les inconvénients que présentent les dispositifs de déchargement actuellement utilisés sur les différentes seaux de nettoyage, sont supprimés par le dispositif de déchargement suivant la présente invention. Ce dispositif de déchargement ne présente pas de pièces dont les surfaces glissent les unes par rapport aux autres. Le déchargement du liquide s'effectue directement à travers un orifice à ouverture totale, les surfaces assurant l'étanchéité ne subissent aucune usure et il n'existe aucune zone dans laquelle la saleté peut venir se loger ou les fibres ou autres saletés peuvent s'accumuler. Les opérations de fermeture et d'ouverture sont extrêmement simples et pratiques. La manutention se réduit à un échange éventuel extrêmement simple, après de longues périodes d'utilisation, d'un joint d'étanchéité normal du commerce. La fermeture étanche, excluant tout égouttement, est garantie par des dispositifs de blocage de sécurité d'une grande simplicité pratique.

On décrira ci-après, à titre d'exemples non limitatifs, diverses formes d'exécution de la présente invention, en référence aux dessins annexés sur lesquels :

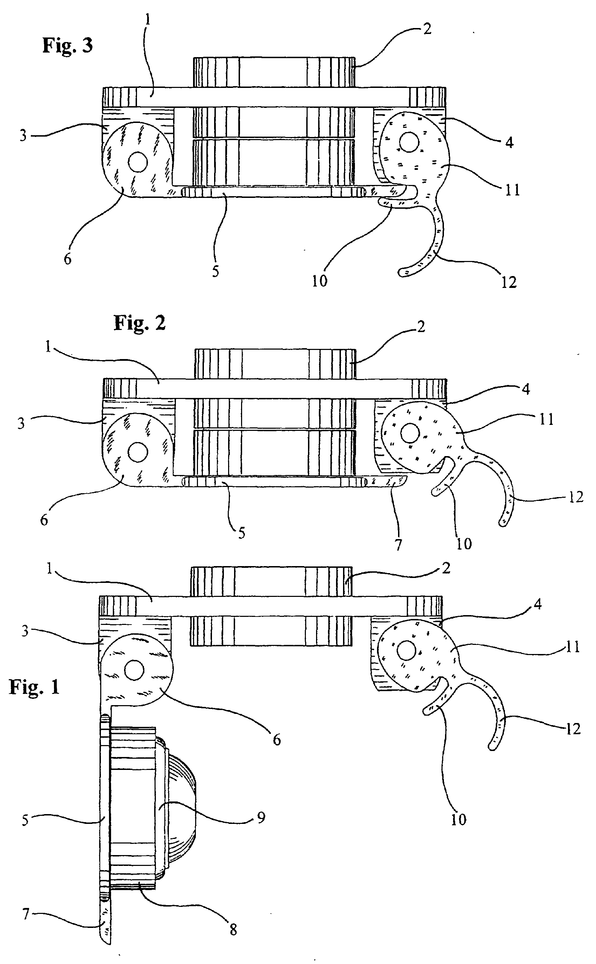

La figure 1 est une vue en plan du dispositif de déchargement seul avec l'orifice totalement libre et le volet de fermeture totalement ouvert.
La figure 2 est une vue en plan du dispositif de déchargement seul avec le volet de fermeture représenté après avoir tourné contre l'orifice en assurant sa fermeture, tandis que la bride de serrage n'est pas en prise avec le volet.
La figure 3 est une vue en plan du dispositif de déchargement seul avec l'orifice fermé par le volet et la bride de serrage maintenant le volet fermé.

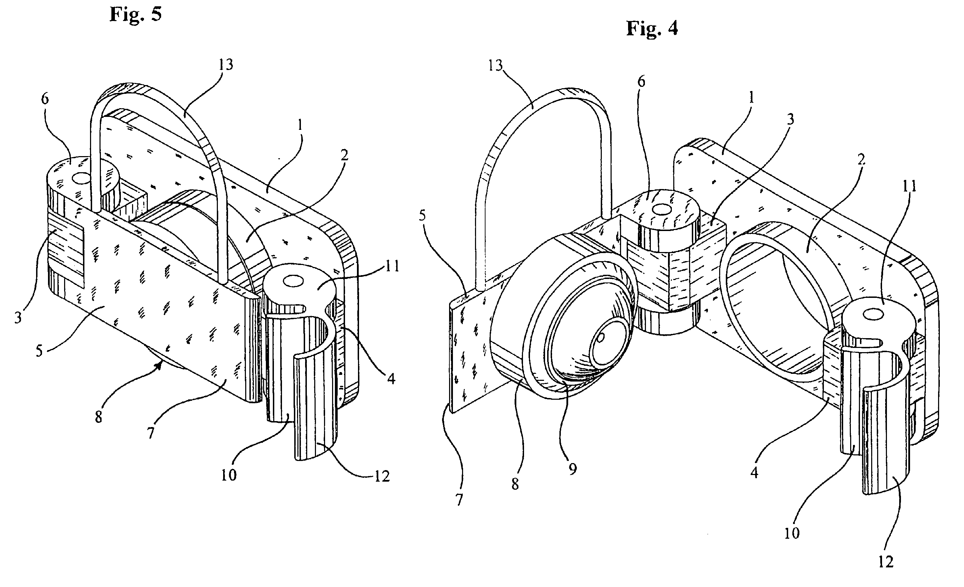

La figure 4 est une vue en perspective, prise du haut, du dispositif de déchargement seul avec l'orifice totalement libre et le volet de fermeture en position totalement ouverte.
La figure 5 est une vue en perspective, prise du haut, du dispositif de déchargement seul avec l'orifice de fermeture qui, après avoir tourné, est appliqué contre l'orifice en assurant sa fermeture, tandis que la bride de serrage n'est pas en prise avec le volet.

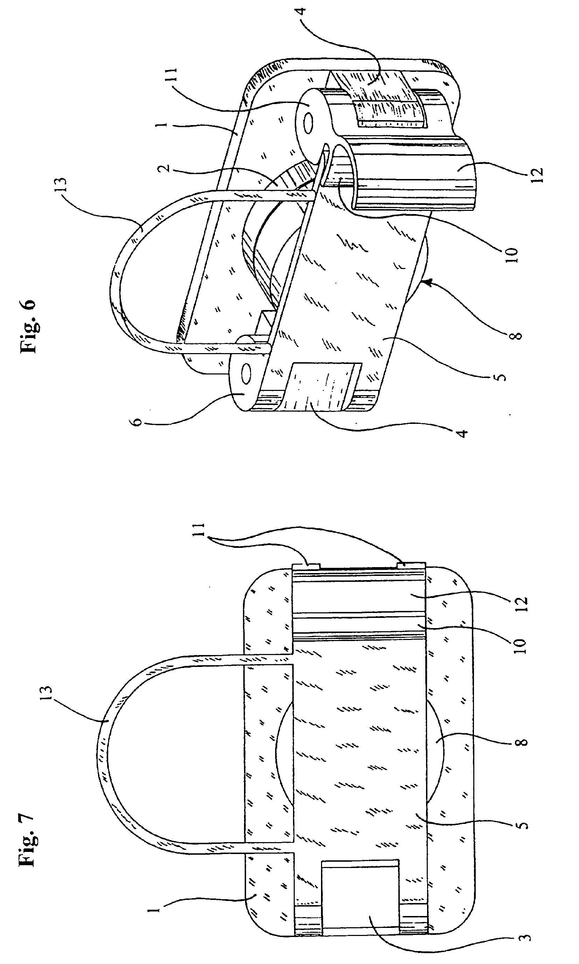

La figure 6 est une vue en perspective, prise du haut, du dispositif de déchargement seul avec l'orifice fermé par le volet et la bride de serrage assurant le blocage du volet.
La figure 7 est une vue en élévation, de face, du dispositif de déchargement seul avec l'orifice fermé par le volet et la bride de serrage en prise avec le volet.

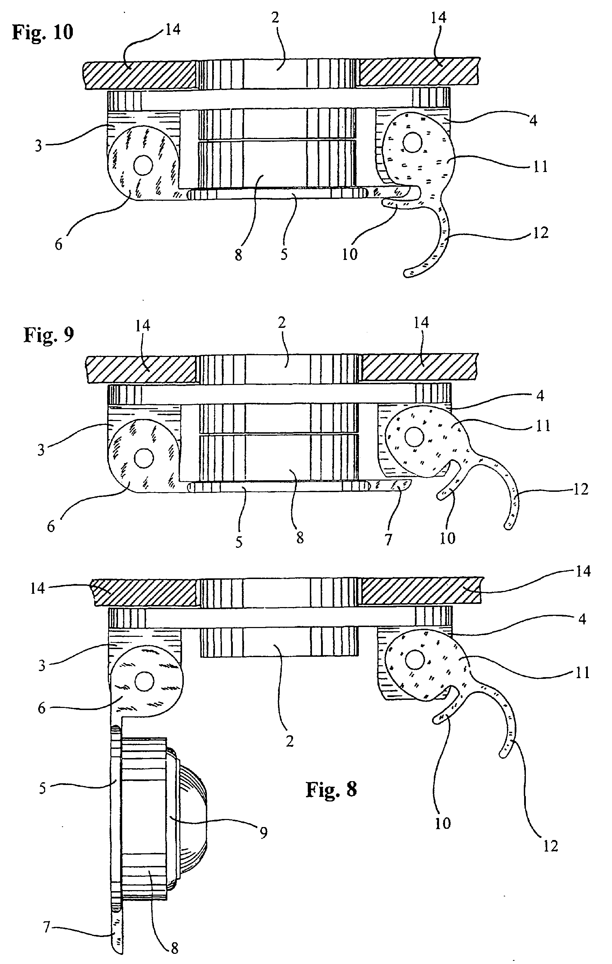

La figure 8 est une vue en plan du dispositif de déchargement représenté sur la figure 1 lequel est appliqué sur une paroi d'un contenant. L'orifice 2 est totalement libre et le volet de fermeture se trouve dans la position totalement ouverte.
La figure 9 est une vue en plan du dispositif de déchargement représenté sur la figure 2 et qui est appliqué sur une paroi d'un contenant. Le volet de fermeture qui a été appliqué, après une rotation, contre l'orifice, maintient celui-ci fermé, tandis que la bride de serrage n'est pas en prise avec le volet.
La figure 10 est une vue en plan du dispositif de déchargement représenté sur la figure 3, lequel est appliqué sur une paroi d'un contenant. L'orifice est fermé par le volet et la bride de serrage assure le blocage du volet.

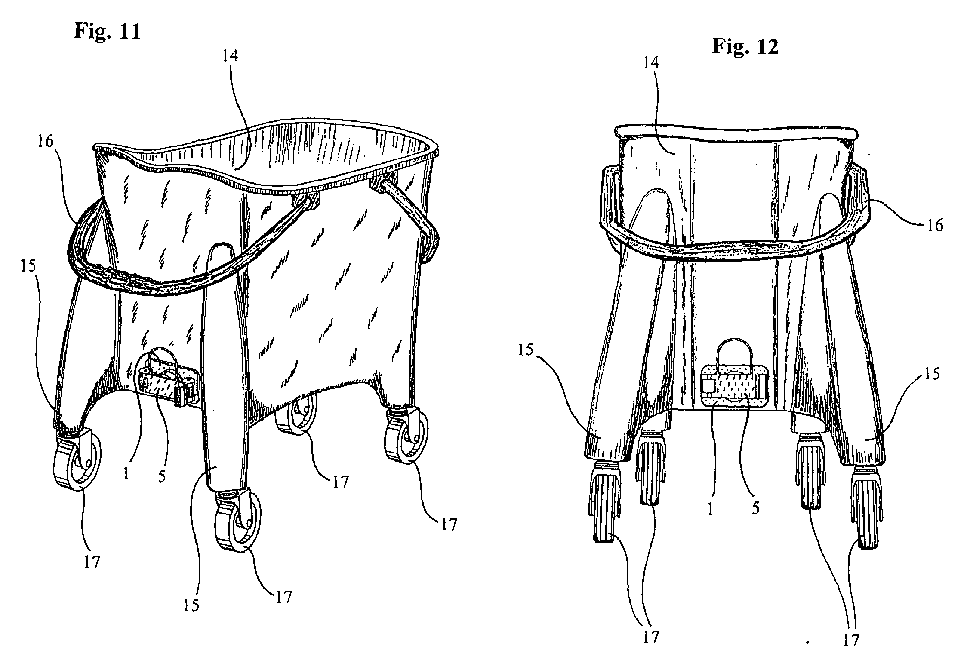

La figure 11 est une vue en perspective, prise du haut, d'un seau mobile sur une paroi duquel est appliqué le dispositif de déchargement suivant la présente invention.
La figure 12 est une vue en élévation frontale du seau de la figure 11 sur une paroi duquel est appliqué le dispositif de déchargement suivant la présente invention.

Sur les figures du dessin on voit la partie fixe 1 ou le flasque portant le dispositif, l'orifice de déchargement 2 traversant le flasque et comprenant, sur une face, une saillie destinée à être introduite dans la paroi d'un contenant et, sur l'autre face, une autre saillie destinée à être rejointe par une paroi de fermeture. Un élément 3, solidaire de la partie fixe 1, soutient l'articulation d'une extrémité formant charnière 6 d'un volet 5. Un élément 4, solidaire de la partie fixe 1, soutient l'articulation d'une extrémité 11 d'une bride 10. A l'extrémité opposée de la charnière 6 le volet 5 comporte une parti terminale 7. Une saillie 8, portée par le volet 5, se trouve, lorsque le volet 5 est parallèle à la partie fixe 1, devant l'orifice de déchargement 2, dans une position coaxiale par rapport à cet orifice. Un joint d'étanchéité 9, porté par la saillie 8, est pressé sur l'orifice 2 pour assurer l'étanchéité hydraulique. La bride 11 comporte un élément actif 10 qui tourne par-dessus la partie extrême 7 du volet 5 pour assurer le serrage de celui-ci. La bride 11 comporte également un appendice solidaire 12 constituant un élément de prise pour la manoeuvre de la bride. Le volet 5 comporte un appendice solidaire 13 constituant un élément pour sa manoeuvre.

On voit également sur les figures un seau 14 auquel peut être appliqué le dispositif de déchargement. Ce seau comporte des jambes 15 s'étendant à partir des parois du seau, des anses 16 pour le soulèvement du seau et des roulettes 17.

Comme on peut le voir, le dispositif de déchargement décrit l'a été à titre d'exemple concernant une solution préférentielle et par conséquent non limitative. Le principe fondamental du dispositif de déchargement suivant l'invention, assurant la fermeture de l'orifice, n'utilise pas des organes coulissant entre eux mais fait appel au contraire à une paroi pourvue d'un joint qui, appliquée contre l'orifice de déchargement, obture cet orifice, cette paroi étant maintenue appliquée à force au moyen d'une bride ou d'éléments équivalents.

## Revendications

1. Dispositif de déchargement du liquide contenu dans un seau de nettoyage comprenant une partie fixe (1) pourvue, en son centre, d'un orifice (2) communiquant avec l'intérieur du seau,
**caractérisé en ce que** la partie fixe (1) est pourvue, à proximité de l'orifice (2), d'un élément d'articulation (3) et un volet (5) articulé sur l'élément (3) fixé sur le côté de l'orifice (2) et pouvant se placer, à la suite d'une rotation, sur le devant de l'orifice (2) en fermant celui-ci.

2. Dispositif de déchargement du liquide contenu dans un seau de nettoyage suivant la revendication 1, **caractérisé en ce qu'**il comprend une bride de serrage (10) articulée sur un élément d'articulation (4) fixé sur un côté de l'orifice (2) et pouvant s'accrocher, à la suite d'une rotation, sur un bord du volet de fermeture (5).

3. Dispositif de déchargement du liquide contenu dans un seau de nettoyage suivant l'une des revendications précédentes, **caractérisé en ce que** le volet (5) de fermeture de l'orifice (2) est pourvu, en son centre, d'une saillie (8) qui s'applique sur l'orifice (2) en fermant celui-ci.

4. Dispositif de déchargement du liquide contenu dans un seau de nettoyage suivant la revendication 3, **caractérisé en ce que**, pour le maintien de la fermeture, la saillie (8) du volet (5) est pourvue, à son extrémité, d'un élément à relief qui, après une interférence initiale pendant la phase de fermeture, s'applique sur un siège associé formé à l'intérieur de l'orifice (2).

5. Dispositif de déchargement du liquide contenu dans un seau de nettoyage suivant l'une des revendications précédentes **caractérisé en ce que** le volet de fermeture (5) est pourvu, du côté qui est tourné vers l'orifice (2), d'un joint d'étanchéité (9).

6. Dispositif de déchargement du liquide contenu dans un seau de nettoyage suivant la revendication 5, **caractérisé en ce que** la saillie (8) portée par le volet de fermeture (5) est pourvue d'un joint d'étanchéité interchangeable (9).

7. Dispositif de déchargement du liquide contenu dans un seau de nettoyage suivant l'une des revendications précédentes **caractérisé en ce que** la partie fixe (1) qui est pourvue, en son centre, de l'orifice (2) communiquant avec le seau et d'un ou plusieurs éléments d'articulation (3, 4), est obtenue directement sur la paroi du seau au cours du moulage de l'ensemble du seau.

## Claims

1. Device for removing the liquid contained in a cleaning bucket comprising of a fixed part (1) that has an opening (2) in the middle that communicates with the inside of the bucket, **characterised by** the fact that the fixed part (1) has, near the opening (2), a hinged element (3) and a panel (5) hinged to the element (3) fixed on the side of the opening (2) that can, after rotating, position itself in front of the opening (2) closing it.

2. Device for removing the liquid contained in a cleaning bucket according to claim 1, **characterised by** the fact that it includes a clamp (10) hinged to a hinged element (4) fixed on one side of the opening (2) that can, after rotating, keep the closing panel (5) fastened to an edge.

3. Device for removing the liquid contained in a cleaning bucket according to one of the preceding claims, **characterised by** the fact that the panel (5) for closing the opening (2) has a ledge (8) in the middle that goes over the opening (2) closing it.

4. Device for removing the liquid contained in a cleaning bucket according to claim 3, **characterised by** the fact that in order to keep the closure secure, the ledge (8) of the panel (5) has a raised part that, once an initial clearance is surpassed during the closure phase, couples with a special grooved seat on the inside of the opening (2).

5. Device for removing the liquid contained in a cleaning bucket according to one of the preceding claims, **characterised by** the fact that the panel (5) has a seal (9) on one side facing the opening (2).

6. Device for removing the liquid contained in a cleaning bucket according to claim 5, **characterised by** the fact that the ledge (8) of the panel (5) has an interchangeable seal (9).

7. Device for removing the liquid contained in a cleaning bucket according to one of the preceding claims, **characterised by** the fact that the fixed part (1), which has an opening (2) in the middle that communicates with the bucket, and has one or more hinged elements (3, 4), is obtained directly on the wall of the bucket with the same mould as the bucket.

## Patentansprüche

1. Vorrichtung zum Ablassen der Flüssigkeit eines Putzeimers, der über einen festen Teil (1) mit einer mittig gelegenen Öffnung (2) verfügt, welche mit dem Inneren des Eimers kommuniziert, **dadurch gekennzeichnet, dass** der feste Teil (1) in der Nähe der Öffnung (2) über ein aufklappbares Element (3) und eine aufklappbare Klappe (5) auf dem Element verfügt, welche seitlich der Öffnung (2) angebracht ist und die Fähigkeit besitzt, sich nach einer Drehung auf die Öffnung (2) zu legen und diese zu schließen.

2. Vorrichtung zum Ablassen der Flüssigkeit eines Putzeimers, dem Anspruch 1 entsprechend, **dadurch gekennzeichnet, dass** sie über einen aufklappbaren Bügel (10) verfügt, der auf einem aufklappbaren Element (4) seitlich der Öffnung (2) angebracht ist, welche die Fähigkeit besitzt, die Verschlussklappe (5) nach einer Drehung, an einem Rand eingehakt, zu halten.

3. Vorrichtung zum Ablassen der Flüssigkeit eines Putzeimers, den vorherigen Ansprüchen entsprechend, **dadurch gekennzeichnet, dass** die Verschlussklappe (5) der Öffnung (2) in der Mitte mit einem Vorsprung (8) versehen ist, der sich auf die Öffnung (2) legt und diese verschließt.

4. Vorrichtung zum Ablassen der Flüssigkeit eines Putzeimers, dem Anspruch 3 entsprechend, **dadurch gekennzeichnet, dass** der Vorsprung (8) der Klappe (5) zum Festhalten des Verschlusses in Richtung des Endstückes mit einer Erhöhung versehen ist, die sich nach Überwindung des anfänglichen Übermaßes während der Verschlussphase in eine dafür vorgesehene genutete Stelle einpasst, die sich im Inneren der Öffnung (2) befindet.

5. Vorrichtung zum Ablassen der Flüssigkeit eines Putzeimers, einem der vorherigen Ansprüche entsprechend, **dadurch gekennzeichnet, dass** die Verschlussklappe (5) auf der Seite zur Öffnung (2) hin mit einer Dichtung (9) versehen ist.

6. Vorrichtung zum Ablassen der Flüssigkeit eines Putzeimers, dem Anspruch 5 entsprechend, **gekennzeichnet dadurch, dass** der Vorsprung (8), der von der Verschlusskappe (5) gehalten wird, mit einer austauschbaren Dichtung (9) versehen ist.

7. Vorrichtung zum Ablassen der Flüssigkeit eines Putzeimers, den vorherigen Ansprüchen entsprechend **dadurch gekennzeichnet, dass** der feste Teil (1), der über eine mittig gelegene Öffnung (2), welche mit dem Inneren des Eimers kommuniziert, und über ein oder mehrere aufklappbare Elemente (3, 4) verfügt, direkt auf einer Wand des Eimer während des selben Pressvorgangs des Eimers erhalten wird.
